# EUROPEAN PATENT SPECIFICATION

(11) **EP 2 296 846 B1**
(45) Date of publication and mention of the grant of the patent: **09.11.2011**
(21) Application number: 09719043.3
(22) Date of filing: 09.03.2009
(51) Int. Cl.: B23Q 39/04, B23Q 7/02

(54) **MULTISPINDLE TOOL MACHINE**
MEHRSPINDEL-WERKZEUGMASCHINE
MACHINE-OUTIL À BROCHES MULTIPLES

(30) Priority: 11.03.2008 IT BS20080048
(43) Date of publication of application: 23.03.2011
(73) Proprietor: Buffoli Transfer S.p.a., 25128 Brescia (IT)
(72) Inventor: BUFFOLI, Edoardo, I-25128 Brescia (IT); BUFFOLI, Francesco, I-25128 Brescia (IT)
(74) Representative: Sangiacomo, Fulvia
(86) International application number: PCT/IT2009/000087
(87) International publication number: WO 2009/113117

(56) References cited:
- EP-A- 1 203 634
- WO-A-03/103892
- DE-A1- 3 837 279
- DE-B1- 2 401 656
- DE-U1- 29 814 891

## Description

### Field of the Invention

This invention concerns in general machine tools with multiple worktables, and refers in particular to an innovative multi-spindle machine tool for machining items in rotation.

### State of the Technique

In the field of machining of items in series that require different machining operations, automatic machines with a number of work stations positioned in sequence such as multi-spindle lathes, transfer machines and the like, are commonly used.

On the one hand, machine tools with a transfer machine configuration are prepared for machining fixed items, that is to say not turning. They basically comprise, in the area of a support base, a worktable turning intermittently around an axis and equipped with gripping means, such as clamps or vices, to hold each item during machining, and one or more tool operating units rotating in a number of work stations provided in association with the worktable.

Each rough item can be prepared as an individual element or achieved by shearing it in the form of a cut down size from a continuous bar on loading it into a respective clamp of the worktable. Once in the machine, each item follows a set course, carried by the worktable and transferred in succession in each of the work stations for the specific operation to be carried out according to a programmed cycle, starting from a loading station up to a downloading station of the item. The blocking means, whether clamps or vices, do not turn, therefore, as stated above, the items remain fixed; they are, on the other hand, the toot carried by the operating units which are prepared to rotate depending on the turning, milling, drilling operations to be carried out.

Some producers in fact have also proposed transfer machines using rotating item grippers, positioned however on the perimeter of the table in an orthogonal plane to the rotation axis of the table itself. They allow the items to be machined from opposite sides, but have the drawbacks of having high overall dimensions, being difficult to access, if not impossible, to mount robust carriers and spindles for heavy machining and be obliged to pick the item up again using the same gripper in an intermediate part of the work cycle.

On the other hand, the machine tools in the configuration of multi-spindle lathes have always been provided for machining items in rotations. They have in this case a spindle holder drum which is equipped with several parallel spindles, each one designed to receive and rotate an item, or a bar, and which turn intermittently around an axis to carry each item, or bar, in line with a succession of work stations in which turning carriages with fixed and, sometimes, also rotating tools operate.

One of the problems of the classic multi-spindle lathes lies in the difficulty of one complete machining of the item in every part, given that one of the portions of the item is inserted and blocked in a spindle and consequently cannot be accessed from its rear side gripped in the spindle.

Therefore, in order to completely machine each item, also in and from the initial inaccessible part, it was decided to proceed with the possible machining of the parts of the item protruding from the spindle and then to reposition the semi-machined item in a counter spindle to expose its first hidden part so as to carry out the machining of the latter.

For a complete machining of the items that require multiple operations on opposite parts of the piece, it was decided to use multi-spindle lathes with two opposed and parallel spindle-holders and turning carriages associated with said drums and interposed between them. So, a first spindle-holder drum is equipped with a number of rotatable spindles, the second spindle-holder drum is equipped with a number of so-called counter spindles, also rotatable, facing towards the spindles of the first spindle-holder drum, and the machining carriages are placed and operating between the two drums and carried by respective turret so that they can access and work the items carried both by the spindles and counter spindles on board the two parallel drums.

Nevertheless, the two spindle carrier drums tend also to increase the complexity and dimensions of these machine tools and furthermore, in order for the turning carriages to be able to machine the items they find themselves mounted on protruding turrets, that is to say susceptible to increased oscillations/deviations under force, that can also reflect negatively on the precision of the machining to be carried out.

Furthermore, it is not possible to mount operating units with rotating tools with appropriate rigidity in order to be able to carry out heavy operations.

The document EP-A-1203634 is representative of the state of the art, as well. It concerns a transfer machine corresponding to the preamble of claim 1, in particular provided for turning operations starting from the shearing of items out of a bar and supporting the item to be machined time by time between two opposite spindles in a single work station.

### Objective and Summary of the Invention

The objective of this invention is on the other hand to propose an innovative machine tool similar to a multi-spindle lathe for multiple machining of rotating items, but advantageously structured like a transfer machine and equipped to receive and be able to machine rotating items at the same time on two opposite fronts of a single turning worktable with operating units positioned on opposite sides of said table.

Such an objective is reached, in agreement with the invention, with a multi-spindle machine tool according to the preamble of claim 1 and substantially characterized by the inclusion of a first line of rotating item gripper devices on one face of the worktable, a second line of rotating item gripper devices on the opposite face of the worktable, and operating units mounted on the basement in association respectively to the first and second line of rotating item gripper devices and at least one manipulator to pick up and transfer each item from at least one rotating device on the first frontal face and at least one rotating device on the second frontal face of the worktable.

In particular, each item gripper device can be in the form of a self-centring spindle or gripper, controlled and rotating continuously to cause the item to turn with regard to the tools of the operating units.

Therefore, the machine tool proposed here has the advantage, even in the presence of a single worktable, of being able to receive and machine each item completely in all its parts: in a first position on one face of the table and then, subject to transfer of each item, in a second position on the opposite face of the same table, access being available from time to time to the portions of each item not blocked in the gripper devices. Obviously this machine cannot directly machine the bar, but a cut down size of the bar, which can be positioned outside the machine or a cutout of a bar in a work station of the machine itself.

Furthermore, compared to the multi-spindle lathes with two parallel tables, the machine tool proposed here, by having a single worktable it has the advantage of requiring a single indexing system and, furthermore, the operating units no longer need to be carried by projecting turrets, but can be rigidly fixed to the machine bed, therefore in firmer conditions, and conveniently oriented with regard to the items which are from time to time on one or the other face of the worktable. In addition, for the machining of long items there is the possibility of adopting a tailstock on an axis with each rotating gripper device.

### Brief Description of the Drawings

The invention will furthermore be described in greater detail in the continuation and in reference to the drawings, in which:
Fig. 1A shows a schematic view from the side of a machine tool according to the invention with operating units on a carriage and provided with turrets to carry out tangential and/or radial turning; they can also be powered for axial and/or radial machining using rotating tools;
Fig. 1B shows a machine tool again as in Fig.1, but provided with more traditional transfer type operating units and therefore positioned axially and/or radially, fixed and/or on carriages, with fixed and/or rotating tools;
Fig. 2 shows the worktable seen from the front; and
Fig. 3 shows the worktable seen from the opposite face.

### Detailed Description of the Invention

In said drawings, reference 11 indicates representatively the bed of the machine tool that supports a worktable 12 and, with regard to the latter, a number of operating units for drilling and turning 13, 13' positioned in several work stations at equal angular distances, numbered in succession from for example 1 to 5.

The worktable 12 è controlled and subject to intermittent rotations around an axis 14. It presents a first frontal face 15 and a second frontal face 15', at right angles to the rotation axis and facing in opposite directions one from the other, and it is equipped with a first line of rotating gripper devices 16 on its first frontal face 15 and with a second line of rotating gripper devices 16' on the second frontal face 15'.

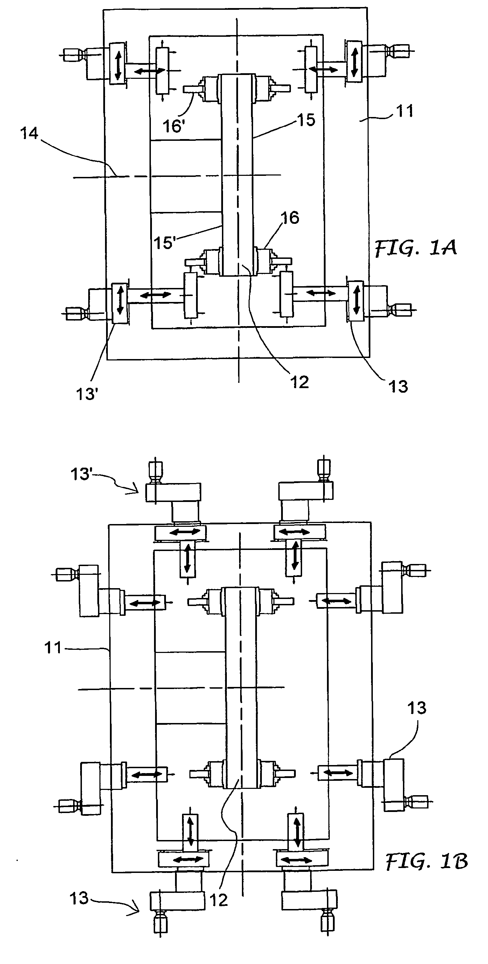

Said gripper devices 16, 16' can be made up of self-centring spindles or rotating grippers, and even if oriented in opposite directions, each gripper device on a face 15 is preferably coaxial to the corresponding gripper device 16' on the other frontal face 15' of the worktable 12 (Figs. 1A, 1B) so that every two pair of organs can be rotated and governed to be blocked and released by the same control system.

Basically, all the gripper devices 16, 16' are parallel to the rotation axis 14 of the worktable, and the work station sequence on the side of the first frontal face 15 of the worktable correspond to the same number of workstations on the side of the second frontal face of said worktable. And therefore, all the gripper devices 16, 16' on the two opposite faces 15, 15' of the worktable are analogically distanced to the work positions 1 - 5 so as to be conducted in sequence and positioned in line with each work station following the intermittent rotation of said worktable 12.

The gripper devices 16 of the first line face towards some operating units 13, whereas the gripper devices 16' in the second line face towards other operating units 13'. The operating units are rigidly supported on the bed 11 of the machine and each one of them will be equipped with at least one tool depending on the work to be carried out:

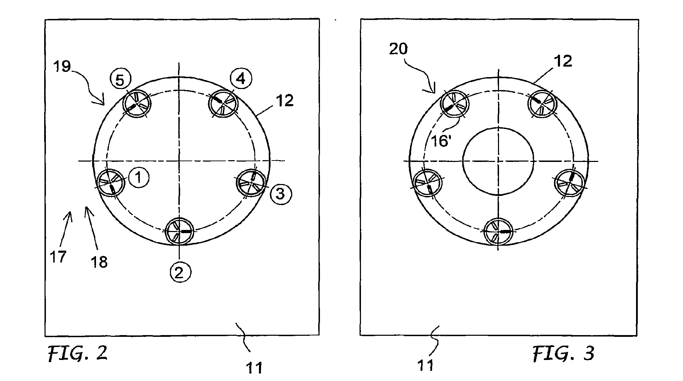

The machine tool has a loading station 17 with start out items, that coincide with the first work station 1 and which is placed on the side of the first frontal face 15 of the worktable 12 (Fig. 2). Each start out item can be prepared as an element on its own or made up of a cut down size blanked from time to time from a continuous bar directly in the machine. In this case, and similarly to how it is carried out in transfer machines for bars, a feeder 18 is provided to work in association with the worktable 12, to forward step by step the continuous bar, and which is also equipped with a shears to shear a cut down size each time from the bar after the end of the latter has been blocked in a gripper device 16 which is in line with the loading station.

Considering again the first face 15 of the worktable (Fig. 2), the work stations from 2 to 5 are provided with operating units 13 to carry out in sequence the initial machining on the part of each item protruding from the relative gripper device 16. In a final work station, (in the drawing, for example, in line with station 5) in association with the worktable is provided at least one manipulating device 19 set up and managed to grip and reposition each item in a gripper device 16' on the opposite face of the face of the worktable.

The second face 15' of the worktable (Fig. 3) has a similar prearrangement of the operating units 13' in relation to the gripper devices 16', to carry out in sequence the second machining on the parts of each item protruding from the relative gripper device 16', until a final download station 20 is reached including a download manipulator to evacuate every finished item.

It should be noted that there can be two exchange manipulators, interacting one with the other: a first manipulator suitable for picking up the item on a level with its already machined part or however protruding from the respective gripper device on the first face of the worktable, leaving its part up to then held in said gripper device free, and a second manipulator suitable to receive the item from the first manipulator and to position it in another direction in a corresponding gripper device on the second face of the worktable, so as to leave the part of the item still to be machined exposed.

Obviously, the gripper devices 16 on the first face of the worktable are prepared to grip a part of the initial rough item, whereas the gripper devices 16' on the other face of the worktable are prepared to grip the item in another position and with a different direction.

Practically, the start out items are blocked in the rotating gripper devices on the first face of the worktable and worked in succession, each one according to one of its parts, with the first operating units during an initial rotation of the worktable on a side of the latter and, after the transfer, by means of the manipulator or manipulators, to the rotating gripper devices on the second face of the worktable and are machined, each one according to the remaining part, during a second rotation of the worktable up to downloading them from the machine.

AS regards to the operating units, the machine, according to the invention described above can be equipped, for example, with axial and radial operating units, with or without turrets, with or without powered toots, fixed or on carriages, as shown by way of a sheer illustrative nature in Figs. 1A and 1B.

## Claims

1. A machine tool for multiple machining comprising a bed (11), a worktable (12) supported on said bed and subject to intermittent rotations around an axis (14), a number of stable work stations (1 - 5) in association with the worktable (12) and at least some comprising an operating unit (13, 13'), and a number of gripper devices on board the worktable (12) to hold and carry in sequence each item to be machined in each work station (1 - 5) following the intermittent rotation of the worktable starting from a loading station (17) of the start out items up to a download station (20) of the finished items, **characterized by** the fact that the worktable (12) has a first frontal face (15) and a second frontal face (15') at right angles to the rotation axis (14) and facing in opposite directions, and in the fact that said first frontal face (15) of the worktable (12) is equipped with a first line of item gripper rotating devices (16) facing towards the first horizontal or vertical, orthogonal or parallel, operating units (13), for the initial machining to be carried out on each item and that said second frontal face (15') of the worktable (12) is equipped with a second line of item gripper rotating devices (16') facing towards the second operating units (13') for the second machining operations to be carried out on each item, and in the fact that one (5) of said work stations (1 - 5) is provided with at least one manipulator (19) for picking up and transferring each item from a rotating device (16) on the first frontal face (15) to a rotating device (16') on the second frontal face (15') of the worktable.

2. A machine tool according to claim 1, in which the item gripper rotating devices (16, 16') on said opposite frontal faces (15, 15') are parallel to the rotation axis (14) of the worktable, with the gripper devices (16) on a frontal face facing in an opposite direction to those (16') on the other frontal face.

3. A machine tool according to claims 1 and 2, in which the item gripper rotating devices (16) on a frontal face are coaxial to the item gripper rotating devices (16') on the other frontal face of the worktable (12), said rotating devices being in the form of spindles or rotating grippers, and every second opposite coaxial device being run by the same control system.

4. A machine tool according to claims 1 and 2, in which the item gripper rotating devices (16) on a frontal face are staggered at an angle with regard to the item gripper rotating devices (16') on the other frontal face of the face worktable (12), said rotating devices being in the form of spindles or rotating grippers and controlled individually.

5. A machine tool according to any of the previous claims, and where the items to be machined are sheared from a continuous bar, in which the loading station (17) of the start out items is positioned on the side of the first frontal face (15) of the worktable (12) and coincides with a first work station (1), and in which in association with said loading station a feeder (18) is provided for intermittent forwarding of a continuous bar and a shears to cut blanks from the continuous bar.

6. A machine tool according to any of the previous claims, in which the item gripper rotating devices (16) on the first frontal face of the worktable are set up to receive and block a part of each start out item during the initial machining of the remaining part of the item itself, and the item gripper rotating devices (16') on the second frontal face of the worktable are set up to receive and block every item during the second machining phase on the remaining part of the item.

7. A machine tool according to any of the previous claims, in which at least one transfer manipulator (19) is set up and managed, to pick up from the machined part.

8. A machine tool according to any of the previous claims, comprising two transfer manipulators (19) set up and managed, one to pick up every item from the machined part and the other to pick up said item from the part that has not been machined.

9. A machine tool according to any of the previous claims, in which each operating unit (13, 13') is fastened rigidly to the supporting bed (11) and is equipped with at least one tool.

10. A machine tool according to claim 9, in which the operating units (13, 13') are mounted and movable on carriages and position in front of the frontal faces of the worktable.

11. A machine tool according to claim 9, in which some operating units (13, 13') can be stable and others movable on carriages, some operating units being positioned in front of the opposite faces (15, 15') of the worktable (12) and others in radial directions to the worktable.

12. A process for multiple machining of items in a multi-spindle machine tool with a worktable (12) which turns intermittently around an axis (14), according to any of the previous claims, including the phases:
- to feed each start out item to the gripper rotating devices (16) positioned on a first frontal face (15) of the worktable,
- to transfer in sequence each start out item in line with several operating units (13, 13') so as to carry out the initial machining starting from a first station up to the final work station during a first rotation of said worktable;
- to mechanically release and transfer in sequence each item semi-machined by the item gripper rotating devices (16) on said first frontal face (15) of the worktable to corresponding item gripper rotating devices (16') on a second frontal face of the worktable,
- to carry in sequence each semi-machined item in line with other operating units (13, 13') to carry out further machining during a second rotation of said worktable concomitantly with the first machining work carried out on the items in the first gripping means (16),
- to download the item following the second machining process.

13. Process according to claim 12, in which each start out item is a pre-sheared or pre-shaped element.

14. Process according to claim 12, in which each item is made up of a cut down size sheared from a continuous bar directly in a machine in line with a feeder.

## Patentansprüche

1. Werkzeugmaschine für multiple Bearbeitungen bestehend aus einem Gestell, einem Arbeitstisch (12), der vom Gestell getragen intermittierend um eine Achse (14) rotiert, mehrere Arbeitsstationen (1 - 5) in Verbindung mit dem Arbeitstisch (12) davon beinhaltet wenigstens einige eine Bearbeitungseinheit(13, 13'), sowie mehrere Werkstückaufnahmen auf dem Arbeitstisch (12), um jedes Werkstück zu halten und nachfolgend zu den verschiedenen Arbeitsstationen (1 - 5) durch intermittierende Rotation des Arbeitstisch von einer Beschickungsstation (17) der Ausgangswerkstücke bis zu einer Abladestation (20) der fertigen Stücke zu bringen, **gekennzeichnet durch** die Tatsache, dass der Arbeitstisch (12) eine erste frontale Fläche (15) und eine zweite frontale Fläche (15') im rechten Winkel zur Rotationsachse (14) besitzt, die in entgegengesetzte Richtungen zeigen und **durch** die Tatsache, dass die besagte erste frontale Fläche (15) des Arbeitstisches (12) mit einer ersten Reihe von rotierenden Werkzeugaufnahmen (16) ausgestattet ist, die gegen die ersten Bearbeitungseinheiten (13), horizontal oder vertikal, rechtwinkelig oder parallel, für die an jedem Werkstück auszuführenden Erstbearbeitungen und von der Tatsache dass die besagte zweite frontale Fläche (15') des Arbeitstisches (12) mit einer zweiten Reihe von rotierenden Werkzeugaufnahmen (16') ausgestattet ist, die gegen weitere Bearbeitungseinheiten (13') für weitere Bearbeitung auf jedem Werkstück gerichtet sind, und von der Tatsache, dass eine (5) der besagten Arbeitsstationen (1 - 5) mit wenigstens einem Werkstückwechsler (19) der jedes Stück von wenigstem einer rotierenden Werkstückaufnahme (16) auf der ersten frontalen Fläche (15) zu wenigstens einer rotierenden Werkstückaufnahme (16') auf der zweiten frontalen Fläche (15') des Arbeitstisches führt.

2. Werkzeugmaschine gemäß Anspruch 1, wobei der die rotierende Werkstückaufnahmen (16, 16') auf den beiden entgegensetzten frontalen Flächen (15, 15') parallel zur Rotationsachse (14) des Arbeitstisches liegen, mit den Werkzeugaufnahmen (16) auf einer frontalen Fläche in entgegengesetzter Richtung als jene (16') auf der anderen frontalen Fläche.

3. Werkzeugmaschine gemäß den Ansprüchen 1 und 2, wobei der die rotierende Werkstückaufnahmen (16) auf einer frontalen Fläche gleichachsig mit den rotierende Werkstückaufnahmen (16') der anderen frontalen Fläche des Arbeitstisches (12) liegen, die besagten Aufnahmen haben die Form einer Spindel oder Drehzange, und immer zwei entgegengesetzte gleichachsige Aufnahmen werden vom gleichen Steuersystem gesteuert.

4. Werkzeugmaschine gemäß den Anforderungen 1 und 2, wobei der die rotierenden Werkstückaufnahmen (16) auf einer frontalen Fläche gegenüber den rotierenden Werkstückaufnahmen (16') auf der anderen frontalen Fläche des Arbeitstisches (12) versetzt sind, die besagten Aufnahmen haben die Form einer Spindel oder Drehzange, und werden einzeln gesteuert.

5. Werkzeugmaschine gemäß jeder der oben angeführten Ansprüchen, wobei der die Werkstücke durch einen Stangenvorschub geschnitten werden, bei der die Beschickungsstation (17) der Ausgangsstücke in der Nähe der ersten frontalen Fläche (15) des Arbeitstisches (12) liegt und mit einer ersten Arbeitsstation (1) übereinstimmt, und in Verbindung mit der besagten Beschickungsstation ein Stangenvorschub (18) für eine intermittierende Bewegung der Stangen und eine Schnitteinheit für das Schneiden der Stange in Stücke.

6. Werkzeugmaschine gemäß jeder der oben angeführten Ansprüchen, wobei der die rotierenden Werkstückaufnahmen (16) auf der ersten frontale Fläche des Arbeitstisches für das Blockieren eines Teils jedes Ausgangswerkstückes im Laufe der ersten Bearbeitungen des verbleibenden Teils desselben ausgestattet sind, und die rotierenden Werkstückaufnahmen (16') auf der zweiten frontalen Fläche des Arbeitstisches für das Blockieren jedes Werkstückes im Laufe der zweiten Bearbeitungen des verbleibenden Teils des Werkstückes vorbereitet sind.

7. Werkzeugmaschine gemäß jeder der oben angeführten Ansprüchen, wobei der mindestens ein Werkstückwechsler (19) zur Aufnahme von Stücken vom bearbeiteten Teil vorbereitet ist.

8. Werkzeugmaschine gemäß jeder der oben angeführten Ansprüchen, mit zwei Werkstückwechslern (19), einer zur Aufnahme jedes Teils des bearbeiteten Teils und der anderen zur Aufnahme des Stückes vom nicht bearbeitenden Teil.

9. Werkzeugmaschine gemäß jeder der oben angeführten Ansprüchen, wobei der jede Bearbeitungseinheit (13, 13') über steife Bindung mit dem Untergestell (11) verbunden und mit wenigstens einem Werkzeug ausgestattet ist.

10. Werkzeugmaschine gemäß Ansprüch 9, wobei der die Bearbeitungseinheiten (13, 13') beweglich auf Schlitten montiert sind und gegenüber den frontalen Flächen des Arbeitstisches liegen.

11. Werkzeugmaschine gemäß Ansprüch 9, wobei der einige Bearbeitungseinheiten (13, 13') fest verbunden und andere beweglich auf Schlitten montiert sein können, diese Bearbeitungseinheiten liegen gegenüber den entgegengesetzten Flächen (15, 15') des Arbeitstisches (12) und in anderen zum Arbeitstisch radialen Richtungen.

12. Vorgangsweise zur multiplen Bearbeitung von Werkstücken in einer Mehrspindel-Werkzeugmaschine mit Arbeitstisch (12) mit intermittierender Drehung um ein Achse, gemäß einer der obengenannten Ansprüchen, einschließlich:
- die ersten rotierende Werkstückaufnahmen (16) auf der ersten frontale Fläche (15) des Arbeitstisches mit dem Ausgangswerkstück beschicken,
- anschließend jedes Ausgangsstück zu mehreren Bearbeitungseinheiten (13, 13') bringen, um die Erstbearbeitung von der ersten bis zur letzten Arbeitsstation während einer ersten Drehung des besagten Arbeitstisches durchzuführen;
- dann der Reihe nach jedes vorbearbeitet Werkstück freigeben und auf mechanischem Weg von den rotierenden Werkstückaufnahmen (16) auf besagter erster frontale Fläche (15) des Arbeitstisches zu den entsprechenden rotierenden Werkstückaufnahmen (16') auf der zweiten frontalen Fläche des Arbeitstisches bringen,
- anschließend das vorbearbeitete Werkstück zu anderen Bearbeitungseinheiten (13, 13') bringen, um weitere Arbeiten während einer zweiten Drehung des besagten Arbeitstisch gleichzeitig mit den ersten Bearbeitungen auf den Werkstücken in den ersten Werkstückaufnahmen (16),
- das Werkstück nach den zweiten Bearbeitungen abladen.

13. Vorgehen gemäß Anspruch 12, bei der jedes Ausgangswerkstück ein vorgeschnittenes oder vorgeformtes Element ist.

14. Vorgehen gemäß Anspruch 12, bei der jedes Werkstück von einer kontinuierlichen Stange direkt auf der Maschine mit Stangenvorschub geschnitten wird.

## Revendications

1. Machine-outil pour usinages multiples comprenant une base, une table porte-pièces (12) supportée sur ladite base et susceptible de tourner par intermittence autour d'un axe (14), plusieurs postes de travail stationnaires (1 - 5) en association à la table porte-pièces (12) et au moins certaines incluant une unité opératrice (13, 13'), et plusieurs organes de prise à bord de la table porte-pièces (12) pour retenir et conduire l'une à la suite de l'autre chaque pièce à usiner dans chaque poste de travail (1 - 5) à la suite de la rotation intermittente de la table porte-pièces à partir d'une position de chargement (17) des pièces de départ jusqu'à une station de déchargement (20) des pièces finis, **caractérisée en ce que** la table porte-pièces (12) a une première face frontale (15) et une deuxième face frontale (15') orthogonales à l'axe de rotation (14) et orientées dans des directions opposées, et **en ce que** ladite première face frontale (15) de la table porte-pièces (12) est dotée d'un premier ordre d'organes tournants de prise de pièces (16) orientés vers les premières unités opératrices (13), horizontales ou verticales, orthogonales ou parallèles, pour les usinages initiaux à effectuer sur chaque pièce, et **en ce que** ladite deuxième face frontale (15') de la table porte-pièces (12) est dotée d'un deuxième ordre d'organes tournants de prise de pièces (16') orientés vers les deuxièmes unités opératrices (13') pour les seconds usinages à effectuer sur chaque pièce, et **en ce que** dans un (5) desdits postes de travail (1 - 5) il est prévu au moins un manipulateur (19) pour prendre et transférer chaque pièce d'au moins un organe tournant (16) sur la première face frontale (15) à au moins un organe tournant (16') sur la deuxième face frontale (15') de la table porte-pièces.

2. Machine-outil selon la revendication 1, dans laquelle les organes tournants de prise de pièces (16, 16') sur lesdites faces frontales opposées (15, 15') sont parallèles à l'axe de rotation (14) de la table porte-pièces, avec les organes de prise (16) sur une face frontale orientés dans une direction opposée à ceux (16') placés sur l'autre face frontale.

3. Machine-outil selon les revendications 1 et 2, dans laquelle les organes tournants de prise de pièces (16) sur une face frontale sont coaxiaux avec les organes tournants de prise de pièces (16') sur l'autre face frontale de la table porte-pièces (12), lesdits organes tournants étant de la forme de mandrins ou de pinces tournantes, et les deux organes coaxiaux opposés étant gérés par un même système de commande.

4. Machine-outil selon les revendications 1 et 2, dans laquelle les organes tournants de prise de pièces (16) sur une face frontale sont décalés angulairement par rapport aux organes tournants de prise de pièces (16') sur l'autre face frontale de la table porte-pièces (12), les dits organes tournants étant de la forme de mandrins ou de pinces tournantes et gérés individuellement.

5. Machine-outil selon une quelconque des revendications précédentes, et où les pièces à usiner sont recoupées dans une barre continue, dans laquelle la station de chargement (17) des pièces de départ est située du côté de la première face frontale (15) de la table porte-pièces (12) et coïncide avec un premier station de travail (1), et dans laquelle en association à ladite station de chargement est prévue un alimentateur (18) pour un entraînement intermittent d'une barre continue et une coupeuse pour couper en morceaux la barre continue.

6. Machine-outil selon une quelconque des revendications précédentes, dans laquelle les organes tournants de prise de pièces (16) sur la première face frontale de la table porte-pièces sont prédisposés pour recevoir et bloquer une partie de chaque pièce de départ au cours de premiers usinages de la partie restante de la pièce même, et les organes tournants de prise de pièces (16') sur la deuxième face frontale de la table porte-pièces sont prédisposés pour recevoir et bloquer chaque pièce pendant les deuxièmes usinages sur une partie restante de la pièce.

7. Machine-outil selon une quelconque des revendications précédentes, dans laquelle au moins un manipulateur de transfert (19) est prédisposé et géré, pour prendre depuis la partie usinée.

8. Machine-outil selon une quelconque des revendications précédentes, comprenant deux manipulateurs de transfert (19) prédisposés et gérés, l'un pour prendre chaque pièce depuis la partie usinée et l'autre pour prélever ladite pièce depuis la partie non usinée.

9. Machine-outil selon une quelconque des revendications précédentes, dans laquelle chaque unité opératrice (13, 13') est appliquée solidement sur la base de support (11) et est équipée avec au moins un outil.

10. Machine-outil selon la revendication 9, dans laquelle les unités opératrices (13, 13') sont montées et mobiles sur des coulisseaux et placées en face des faces frontales de la table porte-pièces.

11. Machine-outil selon la revendication 9, dans laquelle certaines unités opératrices (13, 13') peuvent être fixes et d'autres mobiles sur des coulisseaux, quelques une de ces unités opératrices étant placées en face des faces opposées (15, 15') de la table porte-pièces (12) et d'autres en directions radiales à la table porte-pièces.

12. Procédé d'usinages multiples de pièces dans une machine-outil à broches multiples ayant une table porte-pièces (12) tournant à intermittence autour d'un axe, selon n'importe laquelle des revendications précédentes, comprenant les étapes de :
- alimenter chaque pièce de départ aux premiers organes tournants de prise de pièces (16) disposés sur une première face frontale (15) de la table porte-pièces,
- conduire l'un à la suite de l'autre chaque pièce de départ en correspondance de plusieurs unités opératrices (13, 13') pour effectuer des usinages initiaux depuis une première station jusqu'à une dernier station de travail pendant une première rotation de ladite table porte-pièces ;
- relâcher et transférer mécaniquement l'un à la suite de l'autre chaque pièce semi-fini des organes tournants de prise de pièces (16) sur ladite première face frontale (15) de la table porte-pièces vers les organes tournants de prise de pièces (16') sur une deuxième face frontale de la table porte-pièces,
- conduire l'un à la suite de l'autre chaque pièce semi-fini en correspondance à d'autres unités opératrices (13, 13') pour effectuer des usinages ultérieurs pendant la deuxième rotation de ladite table porte-pièces en même temps que les premiers usinages effectués sur les pièces dans les premiers moyens de serrage (16),
- décharger la pièce après les deuxièmes usinages.

13. Procédé selon la revendication 12, dans laquelle chaque pièce est un élément prédécoupé et préformé.

14. Procédé selon la revendication 12, dans laquelle chaque pièce est constituée d'un morceau coupé dans une barre continue directement en correspondance d'un alimentateur.
